# NEUE EUROPÄISCHE PATENTSCHRIFT

(11) **EP 2 500 389 B2**
(45) Veröffentlichungstag und Bekanntmachung des Hinweises auf die Entscheidung über den Einspruch: **08.02.2023**
(45) Hinweis auf die Patenterteilung: 11.05.2016
(21) Anmeldenummer: 12157819.9
(22) Anmeldetag: 02.03.2012
(51) Int. Cl.: B32B 5/02, B32B 27/32, B32B 27/12, B32B 27/08, B32B 7/12, B32B 5/08, B32B 27/40, B32B 27/30, C09J 7/29

(54) **Klebeband mit Laminat-Träger gebildet aus einem textilen Träger und einer Folie zum Ummanteln von langgestrecktem Gut wie insbesondere Kabelsätzen und Verfahren zur Ummantelung**
Adhesive tape comprising a laminated support material formed from a textile layer and a film for sheathing elongated goods, in particular cable sets and sheathing method
Bande de collage avec support laminé formé d'une matière textile et d'un film destinée à l'enrobage de marchandise allongée, comme notamment des ensemble de câbles et procédé d'enrobage

(30) Priorität: 18.03.2011 DE 102011005763
(43) Veröffentlichungstag der Anmeldung: 19.09.2012
(73) Patentinhaber: tesa SE, 22848 Norderstedt (DE)
(72) Erfinder: Seitzer, Dennis, 72800 Eningen unter Achalm (DE); Siebert, Michael, Dr., 22869 Schenefeld (DE)
(74) Vertreter: tesa SE

(56) Entgegenhaltungen:
- EP-A2- 1 511 140
- EP-A2- 1 511 140
- WO-A1-00/13894
- WO-A1-00/13894
- DE-A1- 10 149 975
- DE-A1- 10 149 975
- DE-A1-102007 058 460
- DE-B4-102005 059 214
- DE-U1-202004 004 804
- DE-U1-202004 019 761
- DE-U1-202004 019 761
- Vliesstoffe; Lünenschloss; Albrecht Georg Thieme Verlag, Stuttgart, New York; Seiten 2, 3, 122 und 123; 1982

## Beschreibung

Die Erfindung betrifft ein Klebeband vorzugsweise zum Umhüllen von langgestrecktem Gut wie insbesondere Leitungen oder Kabelsätze. Des Weiteren betrifft die Erfindung die Verwendung des Klebebands sowie ein langgestrecktes Gut wie einen Kabelbaum, das mit dem erfindungsgemäßen Klebeband ummantelt ist.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird zusätzlich ein gewisser Schutz vor Flüssigkeitszutritt erreicht, mit Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Die Verwendung von Klebebändern mit einem Vlies als Träger zur Bandagierung von Kabelbäumen ist bekannt. So beschreiben die DE 94 01 037 U1 oder die EP 0 668 336 A1 ein Klebeband mit einem bandförmigen, textilen Träger, der aus einem Nähvlies oder Nähwirkvlies besteht, das seinerseits aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämpfungseigenschaften.
Neben dem in den genannten Schriften erwähnten Nähwirkvlies gibt es weitere Träger, die in Klebebändern zur Kabelbaumbandagierung eingesetzt werden.

Der DE 44 42 093 C1 liegt die Verwendung eines Vlieses als Träger für ein Klebeband zugrunde, das durch die Bildung von Maschen aus den Fasern des Vlieses als ein verstärktes Querfaservlies entsteht, also ein dem Fachmann unter dem Namen Malivlies bekanntes Vlies.
Die oben beschriebenen Nachteile des Maliwatt-Vlieses kommen auch beim Malivlies zum Tragen. Mangelnde Fasereinbindung führt zu hohem Faserausriss oder muss bei der Verwendung des Vlieses für Klebebänder durch weitere Maßnahmen kompensiert werden. Hinzu kommt, dass wegen des fehlenden Nähfadens die Längsfestigkeit nicht hoch ist und insbesondere eine hohe Dehnung des Klebebandes auftritt, die zur Verjüngung und Verformung beim Abrollen und Anwenden des Klebebandes führt.
In der DE 100 39 982 A1 wird ein Klebeband auf Basis eines Vliesträgers beschrieben, das mit geringen Flächengewichten von 20 bis 80 g/m² Dämpfungswerte von 3 bis 10 dB(A) erzeugt. Der bevorzugte Vliesträger ist dabei ein Stapelfaservlies ohne weitere Nähfäden, ein Spinnvlies (Filamentvlies) ohne Nähfäden oder ein Meltblownvlies ohne Nähfäden.

In der DE 20 2004 019 761 U1 wird ein Klebeband offenbart, bei dem ein viskoses Polymer auf einen textilen Träger beschichtet wird, so dass das Polymer in den Träger eindringt.

Die DE 101 49 975 A1 beschreibt ein Laminat aus einem textilen Träger mit einer aufkalandrierten Folie mit einer Dicke zwischen 100 und 400 µm.

Mit der EP 1 511 140 A2 ist ein Laminat bekannt geworden, bei dem zwischen zwei textilen Schichten eine Folienschicht vorhanden ist. Die außen liegende Klebeschicht ist auf einer der textilen Schichten aufgebracht.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-AC3T-1A303-AA (Revision 09/2009) "Harness Tape Performance Specification). Im Folgenden werden diese Normen verkürzt mit LV 312 beziehungsweise mit Ford-Spezifikation bezeichnet.
Die Geräuschdämpfung, die Abriebbeständigkeit sowie die Temperaturbeständigkeit eines Klebebandes werden anhand definierter Prüfaufbauten und Prüfverfahren bestimmt, wie sie ausführlich in der LV 312 beschrieben sind.
Die Klassifizierung der Klebebänder erfolgt dann wie nachstehend in Tabelle 1 wiedergegeben:

**Tabelle 1: Klassifizierung Geräuschdämpfung nach LV 312**

| **Geräuschdämpfungsklasse** | **Anforderung** |
|---|---|
| A keine Geräuschdämpfung | 0 bis ≤ 2 dB(A) |
| B geringe Geräuschdämpfung | > 2 bis ≤ 5 dB(A) |
| C mittlere Geräuschdämpfung | > 5 bis ≤ 10 dB(A) |
| D hohe Geräuschdämpfung | > 10 bis ≤ 15 dB(A) |
| E sehr hohe Geräuschdämpfung | > 15 dB(A) |

Die Abriebbeständigkeit eines Klebebandes wird nach LV 312 ebenfalls anhand eines definierten Prüfverfahrens bestimmt. Die Klassifizierung der Klebebänder hinsichtlich ihrer Abriebbeständigkeit bei einem Dorndurchmesser von 5 mm ist in Tabelle 2 wiedergegeben:

**Tabelle 2: Klassifizierung Abriebbeständigkeit nach LV 312**

| **Abriebklasse** | **Anforderung** |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | 5000 -14999 Hübe |
| F extrem hoher Abriebschutz | ≥ 15000 Hübe |

Der Prüfling mit einer Länge von ca. 10 cm wird auf einen 5 mm dicken Stahldorn einlagig in Längsrichtung aufgeklebt. Als Abriebwerkzeug dient ein Stahldraht mit 0,45 mm Durchmesser, der unter einer Gewichtsbelastung von 7 N mittig über den Prüfling reibt. Für weitere Details sei auf die LV 312 verwiesen. Die Messungen erfolgen im Unterschied zur LV 312 nur bei Raumtemperatur.

Die maßgeschneiderte Entwicklung von Kabelwickelbändern für spezielle Anforderungen wie zum Beispiel hohe Schalldämpfung, hohe Abriebbeständigkeit oder Chemikalienresistenz ist bekannt.

Es fehlt allerdings weiterhin ein Klebeband, das mehrere Eigenschaften miteinander vereint und somit ein deutlich erweitertes Einsatzspektrum aufweist.

Maßgebliche zu erfüllende Eigenschaften zur Charakterisierung und Klassifizierung von Klebebändern, die insbesondere zur Kabelbandagierung eingesetzt werden können, sind:
a) Schalldämpfung (nach LV 312):
   vorzugsweise Klasse B oder höher
   Bisher werden die oben aufgeführten Geräuschdämpfungsklassen wie folgt erfüllt.
   - Klasse A: Folien
   - Klasse B: dicke, weiche Folien; dünne, glatte Vliese (zum Beispiel Spinnvliese oder Nassvliese) beispielsweise mit einem Flächengewicht von 80 g/m².
   - Klasse C: weiche, voluminöse Vliese (zum Beispiel ein Maliwattvlies mit einem Trägergewicht von 60 bis 120 g/m²)
   - Klasse D: dicke, voluminöse Vliese zum Beispiel Nadelvliese oder ein Maliwatt mit einem Trägergewicht von 120 g/m² oder höher
b) Temperaturbeständigkeit (nach Ford):
   vorzugsweise T2 oder höher
   Bisher werden die Temperaturklassen wie folgt erfüllt, wobei statt der in der Spezifikation nach Ford erwähnten Klassenbezeichnungen A bis F hier T1 bis T5 gewählt wird
   - T2 (100 °C): unvernetzte PE-Folien; PP-Folien; Vliese aus PP, Viskose
   - T3 (125 °C): vernetzte PE-Folien; Vliese aus Polyester allgemein, zum Beispiel PBT, PA
   - T4 (150°C): Vliese aus PET
c) Kompatibilität mit Aderisolierungen (nach LV 312):
   vorzugsweise T2 oder höher
   Die Kompatibilität mit den Aderisolierungen hängt im Wesentlichen von den Klebmassen ab. Der Träger kann, sofern er nicht schädliche Abbauprodukte bildet, durch eine Abschottung von der Atmosphäre einen positiven Beitrag leisten. Die Temperaturklassen entsprechen denen unter Punkt b), wobei statt der in der LV 312 erwähnten Klassenbezeichnungen A bis F hier T1 bis T5 gewählt wird.
d) Handeinreißbarkeit gemäß der Methode nach AFERA 4007:
   Leichte Einreißbarkeit und saubere Risskante in Querrichtung (Vorbild Maliwatt, sprich exakt in Querrichtung verlaufender glatter Riss ohne Zacken
e) Schutz der Kabel gegen Medien analog LV 312

Der vorliegenden Erfindung liegt die Aufgabe zugrunde, ein Klebeband zur Verfügung zu stellen, das gleichzeitig alle oben erwähnten Eigenschaften in sich vereint und das die einfache, preiswerte und schnelle Ummanteln von langgestrecktem Gut wie Kabelsätzen in Automobilen ermöglicht.

Gelöst wird diese Aufgabe durch ein Klebeband, wie es im Hauptanspruch niedergelegt ist. Gegenstand der Unteransprüche sind dabei vorteilhafte Weiterbildungen des Klebebands und Verfahren zur Anwendung des Klebebands.

Demgemäß betrifft die Erfindung ein Klebeband gemäß Anspruch 1.

Als Vliesstoffe kommen Stapelfaservliese, **nämlich** Nassvliese, Nadelvliese oder Wasserstrahlvliese, sowie Spinnvliese in Frage, die gemäß einer bevorzugten Ausführungsform zusätzlich zu verfestigen sind.

Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Geeignet haben sich Vliese erwiesen, die insbesondere durch ein Übernähen mit separaten Fäden oder durch ein Vermaschen verfestigt sind.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigtwird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, StyrolButadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.
Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.
Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch der Träger einen sehr geringen Foggingwert.
Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise weist der textile Träger eine glattgeschliffene Oberfläche auf. Die glattgeschliffene Oberfläche mag gechintzt sein, wie es beispielsweise in der EP 1 448 744 A1 erläutert wird. Auf diese Weise verbessert sich das Abweisverhalten gegenüber Schmutz.

Als Ausgangsmaterialien für den Träger sind insbesondere (Chemie)Fasern (Stapelfaser oder Endlosfilament) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Bevorzugt wird als Material für den Träger Polyester aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester die Vorteile, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Gemäß einer ersten vorteilhaften Ausführungsform ist die Klebebeschichtung auf der freien Seite der Folie.

Im Folgenden werden für die einzelne Schichten des Trägermaterials bevorzugte Parameter angegeben, ohne die Erfindung damit einschränken zu wollen.

Wenn als textiler Träger ein Spinnvlies (spunbond) eingesetzt wird, liegt das Flächengewicht bei 15 bei 50 g/m², vorzugsweise bei 15 bis 40 g/m². Wenn ein Nassvlies (wet-laid) eingesetzt wird, bei 25 bis 60 g/m², vorzugsweise 25 bis 50 g/m². Wenn ein Nadelvlies (needle-punched) eingesetzt wird, bei 25 bis 60 g/m², vorzugsweise bei 25 bis 50 g/m². Wenn ein Wasserstrahlvlies (spunlace) eingesetzt wird, bei 15 bis 50 g/m², vorzugsweise bei 15 bis 40 g/m².

Die Folie ist vorzugsweise eine thermoplastische, in Extrusion (speziell Blasextrusion) gefertigte Ein- oder Mehrschichtfolie. Alternativ kann es um eine kalandrierte Einschichtfolie handeln. Weiter vorzugsweise beträgt das Aufblasverhältnis mindestens 1:1,5, besonders 1:2 oder mehr. Unter Aufblasverhältnis wird der Faktor verstanden, um den der Durchmesser des aufgeblasenen Folienschlauches größer ist als der Düsendurchmesser bei konstanter Abzugsgeschwindigkeit.

Als Polyolefin wird vorzugsweise ein Polyethylen eingesetzt.
Gemäß einer weiteren bevorzugten Ausführungsform enthält das Polyolefin, vorzugsweise Polyethylen ein Copolymer aus
(a) einem α-Olefin der Formel R-CH=CH₂, wobei R Wasserstoff oder ein Alkylrest mit 1 bis 10 Kohlenstoffatomen ist, und
(b) einer α,β-ethylenisch ungesättigten Carbonsäure aus 3 bis 8 Kohlenstoffatomen sowie
(c) optional einem weiteren monoethylenisch ungesättigten Monomer, wobei die Carbonsäuregruppen des Copolymers zu 10 bis 90 % durch Neutralisation mit Metallionen substituiert sind

Der Begriff Copolymer ist dahingehend zu verstehen, dass das Copolymer auch mehrere unterschiedliche α-Olefine oder ungesättigte Carbonsäuren enthalten kann. Das ungesättigte α-Olefin ist vorzugsweise Ethylen, Propylen oder Buten-(1), besonders bevorzugt Ethylen. Die ungesättigte Carbonsäure kann eine Mono- oder Dicarbonsäure wie Methacrylsäure oder Maleinsäure sein.

Die Schicht mit dem erfindungsgemäßen Copolymer kann daneben andere Polymere enthalten, wobei der Anteil an erfindungsgemäßem Copolymer vorzugsweise mindestens 10 Gew.-% und besonders bevorzugt mindestens 50 Gew.-% beträgt. Besteht die Folie aus mehreren einzelnen Schichten, so enthält zumindest eine den besagten Anteil.

Die Metallionen sind vorzugsweise ein- bis dreiwertig, zum Beispiel aus den Gruppen I, II, III, IV-A und VII des Periodensystems, besonders bevorzugt aus der Gruppe der Alkalimetalle, insbesondere Natrium.

Der bevorzugte Schmelzindex des Copolymers liegt unter 10 g/10 min, vorzugsweise unter 1 g/10 min bei 2,16 kg und 190 °C.

Die geschilderte Folie ist ausführlich in der DE 103 41 123 A1 offenbart, auf die hiermit ausdrücklich Bezug genommen wird.

In Varianten der Folie besteht diese aus einer Einschichtfolie aus TPU oder aus PVC.

Weiter bevorzugt ist die Folie zumindest eine LDPE-Einschicht-Blasfolie mit einer Foliendicke von 15 bis 80 µm, bevorzugt 15 bis 40 µm.
Besonders bevorzugt ist oder umfasst die Folie eine LDPE-Einschichtfolie mit Copolymeranteil des oben geschilderten Copolymers von 20 bis 90 Gew.-%, bevorzugt 30 bis 80 Gew.-% und einer Foliendicke von 15 von 80 µm, bevorzugt 15 bis 40 µm.

Gemäß einer weiteren vorteilhaften Ausführungsform ist die Folie eine Mehrschichtfolie bestehend aus mindestens einer Schicht der beiden zuvor genannten Folien, weiter vorzugsweise beiden, besonders vorzugsweise in einem Dickenverhältnis von 1:2 bis 2:1 und/oder einer Gesamtdicke von 15 bis 80 µm, bevorzugt 15 bis 40 µm.

Besonders bevorzugt ist eine Kombination aus Spinnvlies, Nassvlies, Nadelvlies oder Wasserstrahlvlies mit einer dreischichtigen PE-Folie.

Die PE-Folie besteht aus folgenden Schichten (von oben nach unten):
- LDPE mit 5 µm Dicke ohne Ruß, vorzugsweise abgemischt mit 1 Gew.-% Antiblockmitteln
- LDPE mit 15 µm Dicke, enthaltend 8 Gew.-% Ruß
- LDPE mit 5 µm ohne Ruß, vorzugsweise abgemischt mit 1 Gew.-% Antiblockmitteln

Zur Verbindung der Folie und des Vlieses werden Kaschierklebstoffe, bevorzugt reaktive 1- oder 2-Komponenten PU-Klebstoffe eingesetzt.
Gemäß einer weiteren vorteilhaften Variante der Erfindung können thermoplastische Kaschierklebstoffe auf Polyolefin-Basis eingesetzt werden.
Vorzugsweise beträgt der Masseauftrag 3 bis 15 g/m², weiter vorzugsweise 5 bis 10 g/m².

Gemäß einer bevorzugten Ausführungsform beträgt die Breite des Klebebands zwischen 9 und 38 mm.

Um aus dem Trägermaterial ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine Acrylatschmelzhaftklebemasse, verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Das Auftragsgewicht bewegt sich vorzugsweise im Bereich zwischen 15 bis 200 g/m², weiter vorzugsweise 30 bis 120 g/m² (entspricht ungefähr einer Dicke von 15 bis 200 µm, weiter vorzugsweise 30 bis 120 µm).

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Der K-Wert (nach FIKENTSCHER) ist ein Maß für die durchschnittliche Molekülgröße hochpolymerer Stoffe. Die Bestimmung der Viskosität von Polymeren durch ein Kapillarviskosimeter erfolgt nach DIN EN ISO 1628-1:2009.
Zur Messung werden einprozentige (1 g/100 ml) toluolische Polymerlösungen bei 25 °C hergestellt und unter Verwendung des entsprechenden DIN-Ubbelohde-Viskosimeters nach ISO 3105:1994, Tabelle B.9 vermessen.
Das Aufkonzentrieren kann in entsprechend ausgerüsteten Kesseln oder Extrudern stattfinden, insbesondere beim damit einhergehenden Entgasen ist ein Entgasungs-Extruder bevorzugt. Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten. Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt. Der Restlösungsmittel-Gehalt sollte unter 1 Gew.-% betragen.

Eine Klebemasse, die sich als besonders geeignet zeigt, ist eine Acrylatschmelzhaftklebemasse, wie sie unter der Bezeichnung acResin, insbesondere acResin A 260 UV, von der BASF geführt wird. Diese Klebemasse mit niedrigem K-Wert erhält ihre anwendungsgerechten Eigenschaften durch eine abschließende strahlenchemisch ausgelöste Vernetzung.

Die Klebemasse kann in Längsrichtung des Klebebands in Form eines Streifens aufgebracht sein, der eine geringere Breite aufweist als das Trägermaterial des Klebebands.

Der beschichtete Streifen hat in einer vorteilhaften Ausführungsform eine Breite von 10 bis 80 % der Breite des Trägermaterials. Besonders vorzugsweise erfolgt der Einsatz von Streifen mit einer Beschichtung von 20 bis 50 % der Breite des Trägermaterials.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Weiterhin können zwei Klebstoffstreifen vorgesehen sein, und zwar ein Klebstoffstreifen auf der Oberseite des Trägermaterials und ein Klebstoffstreifen auf der Unterseite des Trägermaterials, wobei die beiden Klebstoffstreifen vorzugsweise an den sich gegenüberliegenden Längskanten angeordnet sind. Gemäß einer Variante sind die beiden Klebstoffstreifen an ein- und derselben Längskante angeordnet.

Vorzugsweise schließen der oder die Klebestoffstreifen jeweils bündig mit der oder den Längskanten des Trägermaterials ab.

Die Herstellung und Verarbeitung der Klebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein. Bei Verfahren aus der Lösung sind Beschichtungen mit Rakeln, Messern oder Düsen bekannt, um nur einige wenige zu nennen.
Möglich ist auch eine Transferierung der Klebemasse von einem anti-adhäsiven Trägertuch oder Releaseliner auf den Trägerverbund.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem textilen Träger, der Folie und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein. Gegebenenfalls befindet sich unter dem Rückseitenlack oder alternativ dazu einen Schaumbeschichtung auf der Rückseite des Klebebands.

Das erfindungsgemäße Klebeband kann in festen Längen wie zum Beispiel als Meterware oder aber als Endlosware auf Rollen (archimedische Spirale) zur Verfügung gestellt werden. Für die Verwendung ist im letzteren Fall dann ein variables Ablängen durch Messer, Scheren oder Dispenser u.ä. möglich oder eine manuelle Verarbeitbarkeit ohne Hilfsmittel.

Des Weiteren kann das Klebeband im Wesentlichen rechtwinklig zur Laufrichtung ein oder mehrere Schwächungslinien aufweisen, so dass das Klebeband leichter handeinreißbar ist.

Um ein besonders einfaches Arbeiten für den Anwender zu ermöglichen, sind die Schwächungslinien rechtwinklig zur Laufrichtung des Klebebands ausgerichtet und/oder in regelmäßigen Abständen angeordnet.

Besonders einfach lässt das Klebeband durchtrennen, wenn die Schwächungslinien in Form von Perforationen ausgestaltet sind.

Es lassen sich auf diese Weise Kanten zwischen den einzelnen Abschnitten erzielen, die sehr fusselfrei sind, also ein unerwünschtes Ausfransen vermieden wird.

Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.

Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrien zu erzielen, beispielsweise konkav oder konvex ausgeformte Schneidkanten.

Die Höhe der Stachel beziehungsweise Messer auf den Stanzwalzen beträgt bevorzugt 150 % der Dicke des Klebebands. Das Loch-Steg-Verhältnis bei der Perforierung, also wie viele Millimeter halten das Material zusammen ("Brücke"), wie viele Millimeter sind durchtrennt, bestimmt, wie leicht insbesondere die Fasern des Trägermaterials einzureißen sind. Des Weiteren beeinflusst dies Verhältnis letztlich auch, wie fusselfrei die Abrisskante zu erhalten ist.
Vorzugsweise beträgt die Stegbreite ungefähr 2 mm und die Schnittbreite zwischen den Stegen ungefähr 10 mm, das heißt, es wechseln sich 2 mm breite Stege mit 10 mm Einschnitten ab. Das Loch-Steg-Verhältnis beträgt demgemäß vorzugsweise 2:10.

Mit dieser Schwächung des Materials lässt sich eine ausreichend geringe Abreißkraft erzielen.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz, weiter vorzugsweise in einem Automobil.

Das erfindungsgemäße Klebeband bietet Vorteile, die derartig für den Fachmann nicht vorhersehbar waren.

Unerwartet führt die Kombination von dünnen Vliesen (Klasse B) und dünnen Folien (Klasse A) in dem erfindungsgemäßen Laminat zu einer besseren Geräuschdämpfung, nämlich Klasse C (siehe Beispiel 3), anstatt nur Klasse B, wie der Fachmann erwartet hätte.

In dem Trägermaterial übernimmt das Vlies im Verbund mit der Folie eine Schutzfunktion bei hohen Temperaturen und ermöglicht somit eine höhere Einstufung in der Temperaturbeständigkeit zum Beispiel einer unvernetzten PE-Folie (die eigentlich in T2 klassifiziert ist) nach T3 oder T4 (siehe Beispiele 1 bis 3). Das Vlies übernimmt eine Stützfunktion für die PE-Folie. Die Folie kann bei höheren Temperaturen zwar aufschmelzen, wird aber durch das Vlies in Position gehalten.

Der Einsatz einer dünnen Folie wiederum ermöglichteine deutliche Reduktion des Flächengewichts des Vlieses, da Dünnstellen im Vlies durch die Folie geschlossen werden. Im Vergleich zu einem reinen Folienklebeband existiert eine textile Haptik. Gleichzeitig führt die blickdichte, geschlossene Oberfläche zu einer einheitlichen Optik. Dieser Punkt ist aus wirtschaftlichen Gesichtspunkten besonders interessant (Reduktion der Vlieskosten durch Verringerung des Flächengewichtes).

Gleichzeitig ergibt sich eine Reduktion des Masseauftrages, da keine Masse im Vlies versenkt wird, was sonst unvermeidbar ist. Zudem bietet die zu beschichtende Folie einen ebenen Untergrund, der daher besonders einfach und sauber zu beschichten ist.

In dem erfindungsgemäßen Laminat verhindert die (PE-)Folie einen übermäßigen Sauerstoffzutritt zur Klebemasse und verlangsamt somit deren Alterung. Durch die verzögerte Alterung der Klebemasse entstehen über den Prüfzeitraum weniger Radikale und die Kabelisolierung erhält länger ihre Flexibilität.

Dieser Vorteil greift natürlich bei empfindlichen Klebemassen beispielswiese auf Basis Naturkautschuk besonders. In diesem Fall schützt die Folie den textilen Träger gegen die Abbauprodukte aus der Kautschukmasse beziehungsweise allgemein der eingesetzten Klebemasse.

Die Alterungsbeständigkeit steigt.

Die Kombination der guten Quereinreißbarkeit der Folie und der strukturellen Festigkeit des Vlieses führt zur Erzielung einer idealen Risskante.

Die Folie bietet im Verbund eine deutlich bessere Barriere gegen die Migration/Aufnahme von Medien als ein saugfähiges Vlies. PE verhält sich beispielsweise gegenüber vielen Medien inert und quillt nicht auf.

Das Klebeband zeigt eine deutlich geringe Neigung zum Flagging durch die geringe Steifigkeit des Verbundes (Reduktion der Gesamtdicke gegenüber einem Vlies im gleichen Flächengewichtsbereich und kein Eindringen der Masse in das Vlies). Unter Flagging wird - bei einem um einen Körper gewickelten Klebeband - die Neigung eines Klebebandendes abzustehen verstanden. Die Ursache ergibt sich aus der Kombination von Haltekraft durch den Klebstoff, der Steifigkeit des Trägers und des Durchmessers des Kabelsatzes.

Geringe Steifigkeit und Dicke bietet gute Anpassungsfähigkeit an Konturen des Kabelsatzes und erhält Flexibilität.

Die Klebebänder mit derartigen Trägern lassen sich relativ problemlos von Hand einreißen, was für den beschriebenen Einsatzzweck und die besonders bevorzugte Verarbeitung als Wickelband zur Bündelung von Kabeln in Automobilen ebenfalls von besonderer Bedeutung ist.

Eine Reißfestigkeit in Querrichtung von weniger als 10 N, welche nach der AFERA-Norm 4007 bestimmt wird, dient als Kriterium für die Handeinreißbarkeit des Klebebandes.

Im Folgenden soll das Klebeband anhand mehrerer Figuren und mehrerer Beispiele näher erläutert werden, ohne damit eine wie auch immer geartete Einschränkung hervorrufen zu wollen.

Es zeigen
- Figur 1: das Klebeband im seitlichen Schnitt,
- Figur 2: einen Ausschnitt eines Kabelbaums, der sich aus einer Bündelung von einzelnen Kabeln zusammensetzt und der mit dem erfindungsgemäßen Klebeband ummantelt ist.

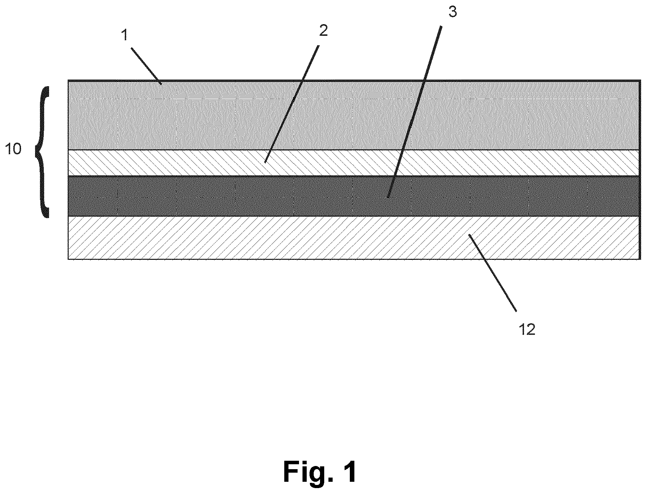

In der Figur 1 ist im Schnitt in Querrichtung (Querschnitt) das Klebeband gezeigt, das aus einem Trägermaterial 10 besteht, auf den einseitig eine Schicht einer selbstklebenden Beschichtung 12 aufgebracht ist.

Das Trägermaterial 10 besteht aus einem Laminat, das gebildet wird aus einem textilen Träger 1 und einer auf der Unterseite des textilen Trägers 1 befindlichen Folie 3. Zwischen textilem Träger 1 und der Folie 3 befindet sich eine Schicht einer Kaschierklebemasse 2.

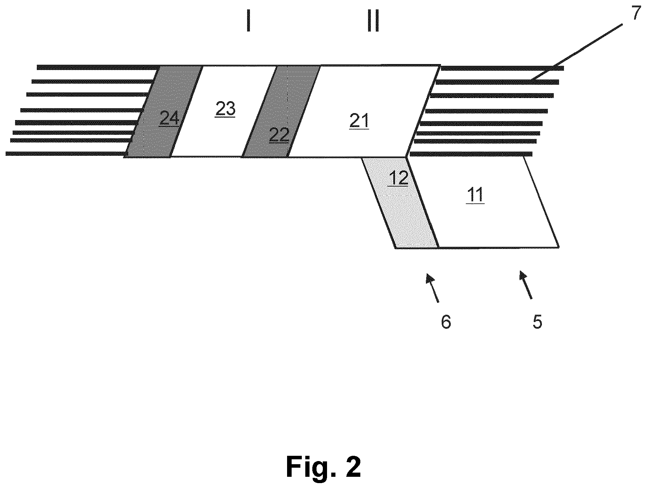

In der Figur 2 ist ein Ausschnitt eines Kabelbaums gezeigt, der sich aus einer Bündelung von einzelnen Kabeln 7 zusammensetzt und der mit dem erfindungsgemäßen Klebeband ummantelt ist. Das Klebeband wird in einer spiralförmigen Bewegung um den Kabelbaum geführt.

Der gezeigte Ausschnitt des Kabelbaums zeigt zwei Wicklungen I und II des Klebebands. Nach links hin würden sich weitere Wicklungen erstrecken, diese sind hier nicht dargestellt.

Auf der Klebebeschichtung ist ein Streifen 5 der Eindeckung vorhanden, so dass sich ein in Längsrichtung des Bands erstreckender Klebestreifen 6 ergibt. Es wechseln sich nichtklebende Bereiche 11, 21, 23 des Klebebands mit klebenden Bereichen 12, 22, 24 ab. (Die Abschnitte 22, 24 sind im Gegensatz zur offen liegenden Klebemasse 12 von außen nicht sichtbar, weshalb die dichtere Schraffur zur Darstellung gewählt ist.)

Die Ummantelung des Kabelbaums erfolgt derartig, dass der Klebemassestreifen 6 vollständig auf dem Klebeband verklebt. Eine Verklebung mit den Kabeln 7 ist ausgeschlossen.

### Beispiele

### Beispiel 1

| | |
|---|---|
| Textiler Träger: | Nassvlies (wet-laid)) |
| | Flächengewicht: 35 g/m² |
| Zusammensetzung: | 22 Gew.-% Polyester, 26,5 Gew.-% Zellulose, 51,5 Gew.-% Binder |
| Kaschierklebstoff: | Acrylatklebemasse |
| Folie: | 70 µm 3-Schicht-PE-Folie der Firma Nordenia wie oben detailliert beschrieben |
| Haftklebemasse: | Acrylatklebemasse |

Wesentliche Merkmale:
- Dämpfungsklasse B
- Temperaturklasse T3 (nach Ford und LV 312)
- Sehr gute Medienbeständigkeit
- Sehr gute Handeinreißbarkeit

### Beispiel 2

| | |
|---|---|
| Textiler Träger: | Spinnvlies (spunbond) Flächengewicht: 34 g/m² |
| Zusammensetzung: | 100 Gew.-% Polyester |
| Kaschierklebstoff: | Acrylatklebemasse |
| Folie: | 70 µm 3-Schicht-PE-Folie der Firma Nordenia wie oben detailliert beschrieben |
| Haftklebemasse: | Acrylatklebemasse |

Wesentliche Merkmale:
- Dämpfungsklasse B
- Temperaturklasse T3 (nach Ford und LV 312)
- Sehr gute Medienbeständigkeit
- Sehr gute Handeinreißbarkeit

### Beispiel 3

| | |
|---|---|
| Textiler Träger: | Nadelvlies (needle-punched) Flächengewicht: 40 g/m² |
| Zusammensetzung: | 100 Gew.-% Polyester |
| Kaschierklebstoff: | Acrylatklebemasse |
| Folie: | 70 µm 3-Schicht-PE-Folie der Firma Nordenia wie oben detailliert beschrieben |
| Haftklebemasse: | Acrylatklebemasse |

Wesentliche Merkmale:
- Dämpfungsklasse C
- Temperaturklasse T3 (nach Ford und LV 312)
- Sehr gute Medienbeständigkeit
- Gute Handeinreißbarkeit

## Patentansprüche

1. Klebeband, insbesondere zum Ummanteln langgetrecktem Gut wie Kabelsätzen in einem Automobil, mit einem Trägermaterial, das zumindest einseitig mit einer Klebebeschichtung versehen ist,
wobei das Trägermaterial aus einem Laminat besteht,
wobei das Laminat gebildet wird aus einem textilen Träger in Form eines Stapelfaservlieses, nämlich ein Nassvlies, wobei das Flächengewicht bei 25 bei 60 g/m² liegt, ein Nadelvlies, wobei das Flächengewicht bei 25 bei 60 g/m² liegt, oder ein ein Wasserstrahlvlies, wobei das Flächengewicht bei 15 bei 50 g/m², oder eines Spinnvlieses, wobei das Flächengewicht bei 15 bei 50 g/m² liegt, und einer auf der Unterseite des textilen Trägers befindlichen Folie, vorzugsweise aus Polyolefinen, TPU oder PVC wie Weich-PVC, weiter vorzugsweise aus Polyolefinen, wobei die Folie eine Dicke von 15 bis 80 µm aufweist,
wobei zur Verbindung der Folie und des textilen Trägers ein Kaschierklebstoff eingesetzt ist,
wobei die Klebebeschichtung auf der freien Seite der Folie ist.

2. Klebeband nach Anspruch 1,
**dadurch gekennzeichnet, dass**
die Spinnvliese mechanisch, die thermisch und/oder chemisch verfestigt sind.

3. Klebeband nach Anspruch 1 oder 2,
**dadurch gekennzeichnet, dass**
die auf der Unterseite des textilen Trägers befindliche Folie aus einer mehrschichtigen, vorzugsweise dreischichtigen PE-Folie besteht.

4. Klebeband nach zumindest einem der Ansprüche 1 bis 3,
**dadurch gekennzeichnet, dass**
die Breite des Trägermaterials zwischen 9 bis 38 mm beträgt.

5. Klebeband nach zumindest einem der vorherigen Ansprüche,
**dadurch gekennzeichnet, dass**
das Trägermaterial ein Flächengewicht von 30 bis 250 g/m², vorzugsweise 50 bis 200 g/m², weiter vorzugsweise 60 bis 150 g/m² aufweist.

6. Klebeband nach zumindest einem der vorherigen Ansprüche,
**dadurch gekennzeichnet, dass**
es sich bei der Kleberbeschichtung um eine Klebmasse auf Basis Naturkautschuk, Synthesekautschuk, Acrylat, vorzugsweise eine Acrylatschmelzhaftklebemasse, oder Silikon handelt.

7. Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

8. Verwendung eines Klebebandes nach zumindest einem der vorherigen Ansprüche zum Ummanteln von langgestrecktem Gut, wobei das langgestreckte Gut in axialer Richtung von dem Band umhüllt wird.

9. Langgestrecktes Gut, wie insbesondere ein Kabelsatz, ummantelt mit einem Klebeband nach zumindest einem der vorherigen Ansprüche.

## Claims

1. Adhesive tape, especially for jacketing elongate material such as cable looms in a motor vehicle, having a carrier material which is provided at least on one side with an adhesive coating,
the carrier material consisting of a laminate,
the laminate being formed from a textile carrier in the form of a staple fibre web, specifically a wet-laid web, where the basis weight is at 25 to 60 g/m², or a needle-punched web, where the basis weight is at 25 to 60 g/m², or a spunlace web, where the basis weight is at 15 to 50 g/m², or a spunbond web, where the basis weight is at 15 to 50 g/m², and from a film which is located on the underside of the textile carrier and is made preferably of polyolefins, TPU or PVC such as plasticized PVC, more preferably of polyolefins, the film having a thickness of 15 to 80 µm,
the film and the textile carrier being joined using a laminating adhesive,
the adhesive coating being on the free side of the film.

2. Adhesive tape according to Claim 1,
**characterized in that**
the spunbond webs are consolidated mechanically, thermally and/or chemically.

3. Adhesive tape according to Claim 1 or 2,
**characterized in that**
the film which is located on the underside of the textile carrier consists of a multilayer, preferably three-layer, PE film.

4. Adhesive tape according to at least one of Claims 1 to 3,
**characterized in that**
the width of the carrier material is between 9 to 38 mm.

5. Adhesive tape according to at least one of the preceding claims,
**characterized in that**
the carrier material has a basis weight of 30 to 250 g/m², preferably 50 to 200 g/m², more preferably 60 to 150 g/m².

6. Adhesive tape according to at least one of the preceding claims,
**characterized in that**
the coating of adhesive comprises an adhesive based on natural rubber, synthetic rubber, acrylate, preferably a pressure-sensitive acrylate hotmelt adhesive, or silicone.

7. Use of an adhesive tape according to at least one of the preceding claims for jacketing elongate material, the adhesive tape being passed in a helical line around the elongate material.

8. Use of an adhesive tape according to at least one of the preceding claims for jacketing elongate material, the elongate material being wrapped in the axial direction by the tape.

9. Elongate material, such as more particularly a cable loom, jacketed with an adhesive tape according to at least one of the preceding claims.

## Revendications

1. Bande adhésive, en particulier pour envelopper un produit allongé, tel que des câblages dans une voiture, présentant un matériau support, qui est pourvu sur au moins une face d'un revêtement adhésif,
le matériau support étant constitué d'un stratifié,
le stratifié étant formé à partir d'un support textile, sous forme d'un non-tissé en fibres discontinues, à savoir d'un non-tissé produit par voie humide, le poids surfacique se situant de 25 à 60 g/m², ou d'un non-tissé aiguilleté, le poids surfacique se situant de 25 à 60 g/m², ou d'un non-tissé produit par jet d'eau, le poids surfacique se situant de 15 à 50 g/m², ou d'une nappe non tissée, le poids surfacique se situant de 15 à 50 g/m², et d'une feuille se trouvant sur la face inférieure du support textile, de préférence en polyoléfines, en TPU ou en PVC, tel que du PVC souple, plus préférablement en polyoléfines, la feuille présentant une épaisseur de 15 à 80 µm,
un adhésif de contrecollage étant utilisé pour la liaison de la feuille et du support textile,
le revêtement adhésif se trouvant sur la face libre de la feuille.

2. Bande adhésive selon la revendication 1, **caractérisée en ce que** les nappes non tissées sont renforcées mécaniquement, thermiquement et/ou chimiquement.

3. Bande adhésive selon la revendication 1 ou 2, **caractérisée en ce que** la feuille se trouvant sur la face inférieure du support textile est constituée d'une feuille de PE multicouche, de préférence tricouche.

4. Bande adhésive selon au moins l'une des revendications 1 à 3, **caractérisée en ce que** la largeur du matériau support est située entre 9 et 38 mm.

5. Bande adhésive selon au moins l'une des revendications précédentes, **caractérisée en ce que** le matériau support présente un poids surfacique de 30 à 250 g/m², de préférence de 50 à 200 g/m², plus préférablement de 60 à 150 g/m².

6. Bande adhésive selon au moins l'une quelconque des revendications précédentes, **caractérisée en ce qu'**il s'agit, pour le revêtement adhésif, d'une masse adhésive à base de caoutchouc naturel, de caoutchouc de synthèse, d'acrylate, de préférence d'une masse autoadhésive fusible à base d'acrylate, ou de silicone.

7. Utilisation d'une bande adhésive selon au moins l'une quelconque des revendications précédentes pour envelopper un produit allongé, la bande adhésive étant guidée le long d'une ligne en hélice autour du produit allongé.

8. Utilisation d'une bande adhésive selon au moins l'une quelconque des revendications précédentes pour envelopper un produit allongé, le produit allongé étant enveloppé dans le sens axial par la bande.

9. Produit allongé, tel qu'en particulier un câblage, enveloppé par une bande adhésive selon au moins l'une quelconque des revendications précédentes.
